**Europäisches Patentamt**

**European Patent Office**

**Office européen des brevets**

(19)

(11) Veröffentlichungsnummer : **0 579 633 B1**

(12) # EUROPÄISCHE PATENTSCHRIFT

(45) Veröffentlichungstag der Patentschrift :
26.07.95 Patentblatt 95/30

(51) Int. Cl.⁶ : **G06F 12/08**

(21) Anmeldenummer : **92907355.9**

(22) Anmeldetag : **02.04.92**

(86) Internationale Anmeldenummer :
**PCT/DE92/00268**

(87) Internationale Veröffentlichungsnummer :
**WO 92/18932 29.10.92 Gazette 92/27**

(54) **VERFAHREN ZUM MASCHINELLEN ERSTELLEN EINES AUS MEHREREN PROGRAMMTEILEN BESTEHENDEN PROGRAMMES.**

(30) Priorität : **12.04.91 DE 4112090**

(43) Veröffentlichungstag der Anmeldung :
**26.01.94 Patentblatt 94/04**

(45) Bekanntmachung des Hinweises auf die
Patenterteilung :
**26.07.95 Patentblatt 95/30**

(84) Benannte Vertragsstaaten :
**BE DE GB IT**

(56) Entgegenhaltungen :
**IBM TECHNICAL DISCLOSURE BULLETIN. Bd.
32, Nr. 5B, Oktober 1989, NEW YORK US Seiten 464-466 ; 'Software tool for reducing page
fault frequency.'**

(56) Entgegenhaltungen :
**PATENT ABSTRACTS OF JAPAN vol. 14, no.
569 (P-1144)18. Dezember 1990 & JP-A-
2244352 (FUJITSU LTD) 28 SEPTEMBER 1990
ACM TRANSACTIONS ON COMPUTER SY-
STEMS. Bd. 7, Nr. 1, Februar 1989, NEW YORK
US Seiten 78-117 ; J.G. THOMPSON ET AL. :
'Efficient (stack) algorithms for analysis of
write-back and sector memories.'**

(73) Patentinhaber : **SIEMENS
AKTIENGESELLSCHAFT
Wittelsbacherplatz 2
D-80333 München (DE)**

(72) Erfinder : **LINDMEIER, Horst
Ackerstrasse 27
D-81514 München (DE)**
Erfinder : **HAFER, Christian
Ottobrunnerstrasse 49
D-81737 München (DE)**
Erfinder : **PLANKL, Josef
Am Stiergarten 29
D-85635 Höhenkirchen/Siegertsbrunn (DE)**

EP 0 579 633 B1

EP 0 579 633 B1

**Beschreibung**

Verfahren zum maschinellen Erstellen eines aus mehreren Programmteilen bestehenden Programmes

Die Erfindung betrifft ein Verfahren zum maschinellen Erstellen eines aus mehreren Programmteilen bestehenden Programmes. Programme werden von Programmierern als Quellenprogramme abgefaßt. Derartige Quellenprogramme werden von einem Compiler verarbeitet, so daß daraus ein auf einem Rechnersystem ablauffähiges Programm maschinell erstellt wird. Ein derartiges Programm besteht häufig aus mehreren Programmteilen. Aus derartigen Programmteilen wird vom Compiler das Programm erstellt. Zwischen diesen Programmteilen können Programmübergänge und Datenzugriffe vorgesehen sein. Beim Ablauf des Programms sollen diese Programmteile gemäß ihrer Anordnung in einem Speicher vorliegen zur Programmbearbeitung mittels Prozessor. Mittels Speicherzugriff adressiert der Prozessor das Programm beispielsweise beim Laden von Instruktionen, beim Lesen von Daten, beim Schreiben von Daten.

Neuere Prozessoren haben eine Adressierfähigkeit, welche weit größer ist als ein kostengünstiger Speicher. Darüber hinaus haben neuere Prozessoren eine Arbeitstaktfrequenz, welche höher ist als die Zugriffszyklusfrequenz eines großen kostengünstigen Speichers. Schnellere Speicher sind weniger kostengünstig. Aus diesem Grunde werden häufig Speicherhierarchien verwendet. Insbesondere wird zumeist ein großer kostengünstiger Halbleiterspeicher als ein Hauptspeicher verwendet mit einer niedrigeren Zugriffszyklusfrequenz in Verbindung mit einem kleinen schnellen Cache, dessen Zugriffszyklusfrequenz auf den Prozessor abgestimmt sein soll.

Beispielsweise kann ein Prozessor betrachtet werden, welcher beim Ablauf der Verarbeitung des Programmes alle 40 nsec einen Befehl als Instruktion aus dem Speicher verarbeiten soll. Als Hauptspeicher kann ein großer Halbleiterspeicher mit 100 nsec Zykluszeit vorgesehen sein. Dazwischen kann ein schnelles Cache mit beispielsweise 10 nsec Zugriffszeit vorgesehen sein, welches beispielsweise innerhalb von 25 nsec eine Instruktion dem Prozessor liefern kann. Derartige Leistungsparameter sind aufgrund von Adressierungsrechnungen beim Prozessor und beim Cache in diesem betrachteten Fall mitunter realistisch. Das Cache wird als eine Abbildung des Hauptspeichers adressiert. Dieses Abbildungsschema kann unterschiedlich vorgegeben sein.

Besonders schnell, einfach realisierbar und kostengünstig ist eine Variante, bei welcher zur Adressierung im Cache die niedrigstwertigen Bits der Hauptspeicheradresse übernommen werden. Dieses wird als direkt abbildendes Cache oder Direct-Map-Cache bezeichnet. Es sind bespielsweise 1024 oder auch 4096 Speicherworte des Hauptspeichers ins Cache ladbar. Diese Speicherworte sollen bevorzugt blockweise ins Cache geladen werden. Als Blockgröße sind 4 bis 16 Worte üblich. Dieser Erfahrungswert ist beispielsweise dadurch begründet, daß nach 4 bis 16 Instruktionen eine Sprunginstruktion folgt zumindest im Durchschnitt bei sehr vielen Programmen.

Zur Beschleunigung kann das Cache eine vorausschauende Ladetechnik erhalten, von welcher auf Verdacht später voraussichtlich benötigte Hauptspeicherinhalte in das Cache vorsorglich geladen werden können. Ein derartiges Cache kann als ein Snoopy-Cache mit Look-Ahead-Ability realisiert sein, so daß insbesondere beim Ändern von Daten eine Inkonsistenz zwischen den Inhalten von Cache und Speicher vermieden wird, indem das Cache den Bustransfer des Hauptspeichers zusätzlich kontrolliert betreffend eines noch ausständigen Write-Back.

Bei einem derartigen schnellen leistungsfähigen Direct-Map-Cache tritt häufig ein Thrashing auf, welches auch Verdrängung genannt wird und dadurch zustandekommt, daß der Prozessor beispielsweise hintereinander auf Speicherinhalte zugreift, welche im Hauptspeicher jeweils auf verschiedenen Adreßpegeln angeordnet sind, jedoch zufolge des Abbildungsschemas nur in denselben Cacheblock geladen werden können. Selbst bei einer leistungsfähigen Look-Ahead-Technik muß der Prozessor Wartezeiten einlegen, bis diese Dateninhalte aus dem Hauptspeicher in das Cache jeweils geholt sind. Deshalb wird oft ein komplexeres Abbildungsschema verwendet.

Dieses Abbildungsschema kann anhand eines Ersetzungsalgorithmus zum Plazieren von in das Cache geladenen Blöcken vorgesehen sein. Der ersetzte Block kann beispielsweise mittels Zufallsgenerator ausgewählt sein. Es kann beispielsweise ein First-In-First-Out (FIFO) Prinzip vorgesehen sein mit Einhaltung einer Reihenfolge beim Laden und Ersetzen. Ebenso kann ein effektives jedoch auch aufwendiges Prinzip eines Least-Frequently-Used (LFU) oder eines Least-Recently-Used (LRU) vorgesehen sein, so daß die Häufigkeit eines Zugriffs zu jedem Block registriert und verglichen wird oder daß die Zeitspanne seit dem letzten Zugriff zu jedem Block gemessen und verglichen wird.

Bei diesen Varianten kann jeder Datenblock des Hauptspeichers auf jeden Cacheblock abgebildet sein. Seine Adressierung im Cache erfolgt bevorzugt nach einem assoziativen Prinzip. Ein derartiges Cache wird Fully-Assocative-Cache oder vollassoziatives Cache genannt.

2

Dieses vollassoziative Cache hat die bestmöglichen Voraussetzungen zur Erzielung einer optimalen Hitrate, insbesondere mit Verwendung einer Lookahead-Technik, sodaß ein vom Prozessor benötigter Speicherinhalt bereits in das Cache geladen ist und daraus geladen werden kann, was auch als Hit bezeichnet wird, im Gegensatz zu einem Miss, welcher dann vorliegt, wenn im Cache der vom Prozessor benötigte Speicherinhalt nicht vorliegt und aus dem Hauptspeicher geholt werden muß, während der Prozessor Wartezyklen ausführt. Trotz optimaler Hitrate ist das vollassoziative Cache relativ langsam. Dies ist insbesondere durch die aufwendige assoziative Adressierung ebenso wie durch den aufwendigen Ersetzungsalgorithmus begründet.

Vielfach wird daher ein insbesondere auch kostengünstiger Kompromiß angewendet in Form eines teilassoziativen Cache. Bei diesem teilassoziativen Cache kann ein bestimmter Speicherinhalt des Hauptspeicher nicht nur auf einen einzigen Cacheblock wie beim Direct-Map-Cache abgebildet werden, sondern gemäß eines Ersetzungsalgorithmusses auf einen von wenigen Cacheblöcken. Üblich sind 2, 4 oder 8 Cacheblöcke bei den sog. 2-way-Caches, 4-way-Caches, 8-way-Caches. Demzufolge wird das Direct-Map-Cache auch als 1-way-Cache bezeichnet.

Zwar ist das teilassoziative Cache nicht so schnell wie das Direct-Map-Cache, jedoch bedeutend schneller wie das vollassoziative Cache. Zwar ist die Hitrate beim teilassoziativen Cache nicht so günstig wie beim vollassoziativen Cache, jedoch bedeutend günstiger wie beim Direct-Map-Cache. Zwar ist das teilassoziative Cache nicht so kostengünstig wie das Direct-Map-Cache, jedoch bedeutend günstiger wie das vollassoziative Cache.

Eine detailiertere Darstellung dieser Sitation ist beispielsweise in den Kursunterlagen zum "Seminar über RISC-Architekturen", Deutsche Informatik-Akademie, Dez. 1989, Kapitel 3, "Speicherarchitektur", Seite 3 - 1 bis 3- 40 erläutert. Eine detailiertere Darstellung von Speicherhierarchien ist beispielsweise im Buch "Computer architecture: a quantitative approach", David A.Patterson, John L. Hennessy, ISBN 1-55880-069-8, 1990, Morgan Kaufman Publishers Inc., Kapitel 8, "Memory-Hierarchy Design", Seite 403 bis 425 erläutert.

Ansätze als einen Beitrag der Software zur Linderung des Problems der Erzielung besserer Hitraten ist insbesondere angegeben in "RISC/os (UMIPS) User's Reference Manual", Vol. 1 (System V), Bestellnr. 3204DOC, Febr. 1989, MIPS Computer Systems Inc.. Dabei soll versucht werden beispielsweise in der Prozedurebene jeweils nur innerhalb eines Moduls eine gestrafftere Anordnung der Prozeduren zu erreichen. Ebenso kann versucht werden beispielsweise aus vorliegenden Prozeduren einzelne Basis-Blöcke herauszulösen und diese in einem neuen Bereich zusammenzustellen.

In den Proceedings of the ACM SIGPLAN'90 Conference on Programming Language Design and Implementation, White Plains, New York, Juni 20 - 22, 1990, ist von den Autoren Karl Pettis and Robert C. Hansen, unter dem Titel "Profile Guided Code Positioning" auf Seite 16 bis 27, eine zweifache Methodik beschrieben zur Verringerung des zusätzlichen Aufwandes für eine beim Ablauf vorgesehene Hierarchie für den Befehlsspeicher.

Einerseits soll das Link-Verfahren ergänzt werden, sodaß ganze Prozeduren bezüglich ihrer Anordnung verlagert werden können gemäß "closest is best" - Strategie, indem jene beiden Prozeduren, deren eine von der anderen häufig aufgerufen wird, möglichst nahe benachbart neben dieser angeordnet wird, also je häufiger aufgerufen, desto näher benachbart angeordnet. Dadurch sollen insbesondere lange Sprünge möglichst vermieden werden. Dabei wird ein nicht gerichteter Graph mit der jeweiligen Anzahl von Aufrufen als Kantengewicht zugrundegelegt.

Andererseits soll das bestehende Paket von Optimierungsverfahren ergänzt werden, so daß Basisblöcke von den Prozeduren verlagert werden können gemäß einem "procedure splitting". Jene Basisblöcke, welche im Ablauf nacheinander folgen, werden als eine Kette zusammen angeordnet. Dabei wird ein gerichteter Graph mit der jeweiligen Anzahl von Folgeübergängen als Kantengewicht zugrundegelegt. Und zwar kann entweder jeweils der am häufigsten jeweils nachfolgende Basisblock als nächstes Kettenglied angefügt werden beginnend mit dem ersten Basis block der Abfolge. Ebenso können auch mehrere unabhängige Ketten zusammengestellt werden, indem die jeweilige höchste Häufigkeit beim gerichteten Ablaufübergang zur Teilkettenbildung dient, so daß am Beginn oder am Ende die Teilkette vergrößert wird gemäß der Richtung des Ablaufüberganges. Die erhaltenen Teilketten werden möglichst so aneinandergefügt, daß Ablaufübergänge von Teilkette zu Teilkette ihrer Reihenfolge entsprechen sollen. In beiden Fällen sollen die Basisblöcke jeweils möglichst eine Reihenfolge entsprechend des Ablaufüberganges erhalten, sodaß möglichst viele Ablaufübergänge in Richtung "vorwärts", und möglichst wenige in Richtung "rückwärts", jeweils bezogen auf ihre Reihenfolge, erfolgen.

Im Ablauf häufig benutzte Basisblöcke sollen demzufolge am Anfang der Reihenfolge angeordnet werden, weniger häufig benutzte als nachfolgende, und am wenigsten benutzte am Ende der Reihenfolge angeordnet werden. Dieses Ziel des procedure splitting, welches auch Prozedurzerteilung genannt wird, soll insbesondere beim Paging erzielte Vorteile bringen. Es konnten zusätzlich gewisse Vorteile beim Instruktionscache aufgezeigt werden, obschon dies nicht beabsichtigt war.

IBM TDB, Bd. 32,Nr. 5B, Oktober 1989, Seiten 464 - 466 beschreibt, daß zur Reduzierung der page fault

EP 0 579 633 B1

Frequenz in einem virtuellen Speichersystem, bei dem Zugriffe auf dieselbe Seite zu unterschiedlichen Zeiten auftreten, das Programm so verändert wird, daß die Zugriffe zur selben Seite zeitlich möglichst hintereinander erfolgen. Dazu kann das Programm in der Reihenfolge der Programmteile geändert werden. Um einem Analytiker dies zu ermöglichen, wird ein Seiten-Analyse Programm durchgeführt, das für jede Seite eine Page Activity Zahl ableitet, die die Streuung der Zugriffe in der Zeit beschreibt und einen Bericht erzeugt, der die Seiten mit den höchsten Zahlen angibt.

Es ist Aufgabe der Erfindung, ein weiteres Verfahren anzugeben zum maschinellen Erstellen eines aus mehreren Programmteilen bestehenden Programmes.

Diese Aufgabe ist gelöst bei einem Verfahren mit den im Patentanspruch 1 angegebenen Merkmalen.

Der Erfindung liegt die Erkenntnis zugrunde, daß bisherige Ansätze zu Verbesserungen bei auftretenden Cache-Kollisionen kein zufriedenstellendes und insbesondere allgemein einsetzbares kostengünstiges Ergebnis liefern. Es ist das Ergebnis der Erfindung, daß ein Verfahren geschaffen werden konnte, welches insbesondere allgemein einsetzbar ist, und von welchem eine Anordnung von einzelnen Programmteilen angegeben werden kann, welche insbesondere zur Vermeidung von Cache-Misses Verbesserungen erzielt, sodaß hardwaremäßig auch eine weniger aufwendige Realisierung insbesondere des Cache ermöglichst ist. Es wird ein Relokationsverfahren angegeben, mittels dessen eine Anordnung von Programmteilen erzielbar ist, in dem schrittweise die Anordnung variiert wird und anhand eines Variierungsverfahrens überprüft wird. Mittels dieses Variierungsverfahrens sollen mehrere in Betracht gezogene Anordnungen einander gegenübergestellt werden können, so daß daraus eine jeweils bestmögliche Anordnung ermittelbar ist.

Insbesondere zur vorteilhaften Reduzierung der Komplexität des Optimierungsproblems sollen beim Variieren der Anordnung bezüglich der Reihenfolge der Programmteile Teilfolgen jeweils bestimmt werden. Dabei soll innerhalb der jeweils gebildeten Teilfolgen die Reihenfolge der Programmteile so variiert werden, daß ein einzelner Programmteil von der untersuchten Teilfolge herausgegriffen wird und als ein Programmteil innerhalb einer anderen Teilfolge untersucht wird. Dies soll für jeden Programmteil der jeweils untersuchten Teilfolge durchgeführt werden, sodaß danach die jeweiligen Ergebnisse verglichen werden können. Jener Programmteil der untersuchten Teilfolge, für welchen dabei das beste Ergebnis erzielt wird, dient dann als jener Bestandteil zur Erweiterung der anderen Teilfolge.

Danach wird die andere Teilfolge ebenso untersucht und variiert bezüglich jedes Programmteiles dieser Teilfolge. Bei mehreren Teilfolgen können diese bevorzugt paarweise untersucht und variiert werden.

Die jeweils betrachteten Teilfolgen können dabei in beliebiger Weise vorgegeben sein. Beispielsweise können ungefähr gleich große Teilfolgen vorgesehen sein, beispielsweise mit einer ungefähr gleich großen Anzahl von Programmteilen, oder beispielsweise mit einem ungefähr gleich großen Speicherplatzbedarf der Programmteile bei jeder der Teilfolgen. Ebenso kann auch eine größere Anzahl von Teilfolgen betrachtet werden.

Beim Variieren der Teilfolgen soll jedesmal eine Layoutänderung erfolgen zufolge des Ausgliederns eines Programmteiles aus einer untersuchten Teilfolge und dessen Eingliedern in die andere Teilfolge. Dies kann beispeilsweise auch so erfolgen, daß ein Programmteil der einen Teilfolge mit einem Programmteil der anderen Teilfolge vertauscht wird. Dies kann beispielsweise auch so erfolgen, daß der ausgegliederte Programmteil der einen Teilfolge stets an einer bestimmten Stelle der anderen Teilfolge eingegliedert wird. Beispielsweise an erster Stelle, letzter Stelle, zweiter Stelle, usw..

Besonders vorteilhaft ist dabei, daß zur Größe des zu variierernden Programmteiles keine Festlegung erforderlich ist. Es können beliebig kleine Programmteile, beispielsweise mittels Prozedurzerteilung erhaltene Basisblöcke, ebenso wie auch beliebig große Programmteile, beispielsweise ganze Module, bezüglich ihrer Reihenfolge variiert und untersucht werden.

Sehr oft wird ein Anteil von rund 90% der Rechenzeit von einem Anteil von nur 10% der Instruktionen benötigt. Falls derartige Programmstellen von Programmteilen mit hoher dynamischer Aktivität häufige Verdrängungen im Cache verursachen, so ist die Performance gering. Gelingt es diese häufigen Verdrängungen zu vermeiden, so ist die Performance hoch. Diese Anzahl der Verdrängungen ist beeinflußbar, indem diese Programmteile bezüglich des Adreßpegels relativ zueinander verschoben werden.

Dies kann beispielsweise dadurch erreicht werden, indem zwischen derartigen Programmteilen eine Lücke eingefügt wird, welche beispielsweise als ein neuer Programmteil erzeugt und eingefügt werden kann. Eine derartige Verlängerung des gesamten Programmes ist jedoch zumeist nicht erwünscht. Diese relative Adreßpegelverschiebung kann insbesondere auch ohne eine Verlängerung des Programmes dadurch erzielt werden, daß ein Programmteil, welcher eine derartige Programmstelle enthält, vertauscht wird, bezüglich seiner Reihenfolge, beispielsweise mit einem anderen Programmteil, oder beispielsweise herausgegriffen wird und an anderer Position eingereiht wird. Bei einer derartigen Verschiebung ist es nicht gewährleistet, daß eine Verbesserung erzielt wird, also eine Verringerung der Anzahl von Cache-Misses. Es ist somit auch möglich, daß eine derartige Verschiebung, eine Verschlechterung erbringt, also eine Vergrößerung der Cache-Misses ergibt.

Bei einer geringeren Anzahl von zu untersuchenden Programmteilen in Verbindung mit einer geringeren Anzahl von jenen dynamisch aktiven Programmstellen ist eine Verschiebung einzelner Programmteile erleichtert kontrollierbar bezüglich ihrer Auswirkungen auf eine Vermeidung bisheriger oder eine Schaffung zusätzlicher Verdrängungen im Cache. Insbesondere bei einer größeren Anzahl von dynamisch aktiven Programmstellen wird deren Abbildung auf das Cache unter Vermeidung von Cachekollisionen schwieriger. Als Ergebnis der Erfindung steht somit ein Verfahren zur Verfügung, durch welches beliebige Programmteile untersucht und verglichen werden können.

Sollte demzufolge beispielsweise auch schon beim ersten Mal, also beispielsweise mit der anfangs vorliegenden Anordnung der untersuchten Programmteile vom Variierungsverfahren eine zufriedenstellend kleine Anzahl von Cache-Misses erkannt werden, sodaß es sich nicht lohnt, eine andere Anordnung zu untersuchen, so wird dies nach der Durchführung des Variierens erkannt, und diese Anordnung wird festgehalten. Anderenfalls wird im Variierungsverfahren die untersuchte Anordnung variiert. Diese variierte Anordnung wird erneut untersucht. Danach soll erneut überprüft werden, ob für diese Anordnung eine zufriedenstellend kleine Anzahl von Cache-Misses erreicht ist. Sobald die vorgesehene Anzahl von Anordnungen untersucht ist, kann unter den untersuchten Anordnungen jene ausgewählt werden mit der geringsten Anzahl von Cache-Misses.

In besonders vorteilhafter Weise ist zufolge des Variierens der Anordnung der Programmteile eine einfachere Hardwarestruktur beim Ablauf einsetzbar. Zufolge dieser einfacheren Hardwarestruktur ist demzufolge auch ein einfacheres Variierungsverfahren ermöglicht, sodaß demzufolge auch eine größere Anzahl von variierten Anordnungen untersucht werden kann beim Erstellen des Programmes. So ist beispielsweise bei einem zugrundegelegten Direct-Map-Cache ein entsprechend einfaches Variierungsverfahren erforderlich zum simulationsartigen Nachbilden des Cache.

Eine bevorzugte Ausführungsform der Erfindung ist dadurch gekennzeichnet, daß nur zwei jeweils zusammenhängende Teilfolgen betrachtet werden, sowie daß beim Variieren ein Programmteil von einer der Teilfolgen in die andere der Teilfolgen so eingefügt wird, daß diese so erweiterte Teilfolge sonst nicht verschoben wird. Besteht demzufolge das Programm beispielsweise aus einer Anzahl gleich zweimal N von Programmteilen, so können beispielsweise der erste bis zum N-ten Programmteil als erste Teilfolge, und der (1+N)-te bis zum (2N)-ten Programmteil als zweite Teilfolge betrachtet werden. Diese Nummerierung soll anhand einer als aktuell zugrundegelegten Reihenfolge der Programmteile erfolgen, sodaß demzufolge blockweise zusammenhängende Teile des Layouts für die beiden Teilfolgen erhalten werden können. Durch diese Aufteilung in die beiden Teilfolgen wird in vorteilhafter Weise die Komplexität des Optimierungsproblems vereinfacht.

Besteht demzufolge das Programm beispielsweise nur aus einem ersten, zweiten, dritten und vierten Programmteil, so kann beispielsweise die erste Teilfolge bestehen aus dem ersten und zweiten Programmteil, die zweite Teilfolge bestehen aus dem dritten und vierten Programmteil.

Soll nun der erste Programmteil aus dem Layout der ersten Teilfolge ausgegliedert werden und in das Layout der zweiten Teilfolge eingegliedert werden, so soll dies so erfolgen, daß er unmittelbar vor den Programmteilen der zweiten Teilfolge in diese eingegliedert wird. Die neue Reihenfolge lautet also, zweiter, erster, dritter, vierter Programmteil, sodaß dadurch für den dritten und vierten Programmteil keinerlei Layout-Verschiebung erforderlich ist. Auf diese Weise wird beim Variieren der ersten Teilfolge das Layout für die nicht variierten Programteile der zweiten Teilfolge in vorteilhafter Weise nicht geändert. Dadurch soll gezielt für die erste Folge eine bestmögliche Anordnung rascher aufgefunden werden können.

Soll hingegen der vierte Programmteil aus dem Layout der zweiten Teilfolge ausgegliedert werden und in das Layout der ersten Teilfolge eingegliedert werden, so soll dies so erfolgen, daß er unmittelbar nach den Programmteilen der ersten Teilfolge in diese eingegliedert wird. Die neue Reihenfolge lautet also, erster, zweiter, vierter, dritter Programmteil, sodaß dadurch für den ersten und zweiten Programmteil keinerlei Layout-Verschiebung erforderlich ist. Auf diese Weise wird beim Variieren der zweiten Teilfolge das Layout für die nicht variierten Programmteile der ersten Teilfolge in vorteilhafter Weise nicht geändert. Dadurch soll gezielt für die zweite Teilfolge eine bestmögliche Anordnung rascher aufgefunden werden können.

Eine weitere bevorzugte Ausführungsform der Erfindung ist dadurch gekennzeichnet, daß jeder Programmteil von einer zu variierenden Teilfolge unmittelbar benachbart zur anderen Teilfolge zum Prognostizieren von Cache-Misses untersucht wird, sowie daß von der zu variierenden Teilfolge mit jenem Programmteil die andere der Teilfolgen erweitert wird, für welchen eine niedrigste Anzahl von Cache-Misses bei diesen Untersuchungen prognostiziert wird. Von jeder der untersuchten Teilfolgen soll demzufolge nur jener Programmteil letztlich ausgewählt werden, durch dessen Ausgliederung der größte Gewinn für eine Nutzung des Cache erzielt werden kann. Falls mit keinem Programmteil durch Ausgliederung ein derartiger Gewinn erzielbar ist, wird beispielsweise auch keiner ausgegliedert.

Wird beispielsweise bei zwei Teilfolgen für jeden Programmteil der ersten Teilfolge jeweils der Gewinn anhand eines Variierungsschrittes ermittelt zufolge dessen zu erprobender Ausgliederung aus der ersten Teilfolge in Verbindung mit seiner zu erprobenden Eingliederung in die zweite Teilfolge, so werden nachfolgend diese Gewinne verglichen. Danach soll nur jener Programmteil mit dem höchsten Gewinn in die zweite Teilfolge eingegliedert verbleiben. Dann wird diese neu gebildete zweite Teilfolge untersucht betreffend des Gewinns für jeden ihrer Programmteile bei einer zu erprobenden Ausgliederung aus der zweiten Teilfolge in Verbindung mit seiner zu erprobenden Eingliederung in die erste Teilfolge. Anschließend soll nur jener Programmteil der untersuchten zweiten Teilfolge mit dem höchsten Gewinn in der ersten Teilfolge eingegliedert verbleiben.

Dadurch ist eine einfache Methode gegeben, welche in vorteilhafter Weise bezüglich des erzielbaren Gewinns rasch eine bestmögliche Anordnung aufzufinden ermöglicht.

Eine weitere bevorzugte Ausführungsform der Erfindung ist dadurch gekennzeichnet, daß innerhalb von wenigstens einer der Teilfolgen eine Unterteilung in weitere Teilfolgen erfolgt, sodaß diese weiteren Teilfolgen anhand von Variierungsschritten variiert und untersucht werden. Durch diese Unterteilung kann jeweils innerhalb einer bestimmten Teilfolge eine bezüglich des Gewinns optimalere Anordnung der Programmteile in vorteilhafter Weise rasch aufgefunden werden.

Eine weitere bevorzugte Ausführungsform der Erfindung ist dadurch gekennzeichnet, daß fortgesetzt jeweils weitere unterteilte Teilfolgen innerhalb von jeder der zuletzt variierten und untersuchten Teilfolgen unterteilt, variiert und untersucht werden. Insbesondere bei einer größeren Anzahl von Programmteilen des Programmes kann durch diese fortgesetzten Unterteilungen eine bezüglich des Gewinns optimalere Anordnung der Programmteile in vorteilhafter Weise rasch aufgefunden werden.

Eine weitere bevorzugte Ausführungsform der Erfindung ist dadurch gekennzeichnet, daß jene variierte und untersuchte Anordnung der Programmteile erneut variiert und untersucht wird, indem daraus neue Teilfolgen betrachtet, variiert und untersucht werden. Sobald die Teilfolgen soweit unterteilt sind, sodaß eine weitere Unterteilung nicht mehr sinnvoll erscheint, soll die daraus ermittelte bestmögliche Reihenfolge der Programmteile demzufolge festgehalten werden und als ein neuer Ausgangspunkt dienen, um daraus beispielsweise wieder zwei große Teilfolgen einzuteilen, und diese wie bereits erläutert zu variieren, zu untersuchen, als bestmögliche Teilfolgen zu ermitteln, sowie zu weiteren Teilfolgen zu unterteilen, usw.. Auf diese Weise können weitere Gewinne erzielt werden zur vorteilhaften Nutzung des Cache.

Die Erfindung wird anhand der Figuren näher erläutert, welchen Ausführungsbeispiele entnehmbar sind.

Die Figur 1 zeigt ein Ablaufübersichtsflußdiagramm eines Verfahrens zum maschinellen Erstellen eines aus mehreren Programmteilen bestehenden Programmes.

Die Figur 2 zeigt ein Ablaufübersichtsflußdiagramm eines Variierungsverfahrens beim Verfahren zum maschinellen Erstellen eines aus mehreren Programmteilen bestehenden Programmes.

Die Figur 3 zeigt ein Ablaufübersichtsflußdiagramm zum Variieren der ersten Teilfolgen beim Variierungsverfahren.

Die Figur 4 zeigt ein Ablaufübersichtsflußdiagramm zum Variieren der zweiten Teilfolgen beim Variierungsverfahren.

Die Fig. 5 zeigt Speicherzugriffe von Programmteilen eines Programmes sowie deren Notierung in einem Trace-Protokoll.

Die Figur 6 zeigt eine Abbildung eines Hauptspeichers auf ein Cache.

Die Figur 7 zeigt eine Anordnung von Programmteilen im Hauptspeicher.

In Zusammenhang mit den Figuren werden folgende Bezugszeichen verwendet:

| | |
|---|---|
| V1000, ... V4000 | Verfahrensschritte |
| PT1, ... PT9 | Programmteile |
| S1, ... S6 | Programmstellen |
| Z12, ... Z64 | Speicherzugriffe |
| TRACE | Trace-Protokoll |
| HS | Hauptspeicher |
| DMC | Direct-Map-Cache |
| CB | Cache-Block |
| ADR | Hauptspeicheradresse |
| MISS | Cache-Miss, Anzahl hiervon |

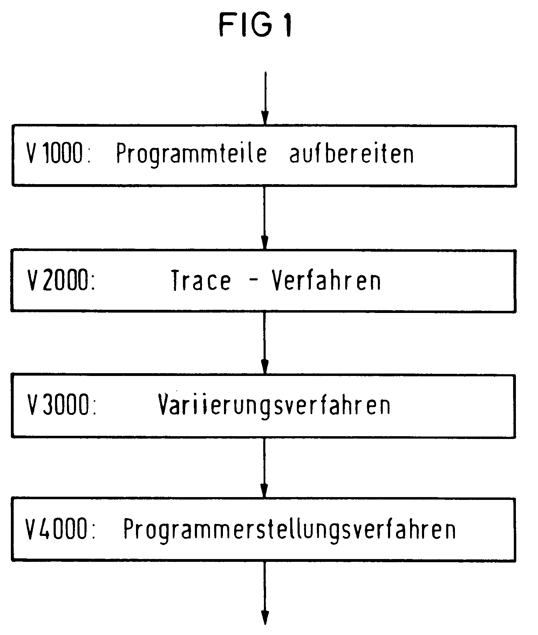

Die Fig. 1 zeigt ein Beispiel für das Verfahren zum maschinellen Erstellen eines aus mehreren Programmteilen bestehenden Programmes.

Es wird ein Verfahrensschritt V1000 ausgeführt, bei welchem die Programmteile aufbereitet werden.

Anschließend wird ein Verfahrensschritt V2000 ausgeführt, bei welchem ein Trace-Verfahren durchgeführt wird. Es wird ein Ablauf des Programmes simuliert. Es wird ein Trace Protokoll erstellt, in welchem Speicherzugriffe des Programmes aufgelistet werden.

Anschließend wird ein Verfahrensschritt V3000 ausgeführt, bei welchem ein Variierungsverfahren durchgeführt wird. Es werden Anordnungen untersucht. Das Trace-Protokoll wird gemäß der jeweils untersuchten Anordnung adaptiert. Anhand des adaptierten Trace-Protokolls werden zu jeder untersuchten Anordnung Cache-Misses prognostiziert.

Anschließend wird ein Verfahrensschritt V4000 ausgeführt, bei welchem ein Programmerstellungsverfahren durchgeführt wird. Es werden die Programmteile des Programmes in jener untersuchten Anordnung angeordnet, für welche eine geringste Anzahl von Cache-Misses prognostiziert ist.

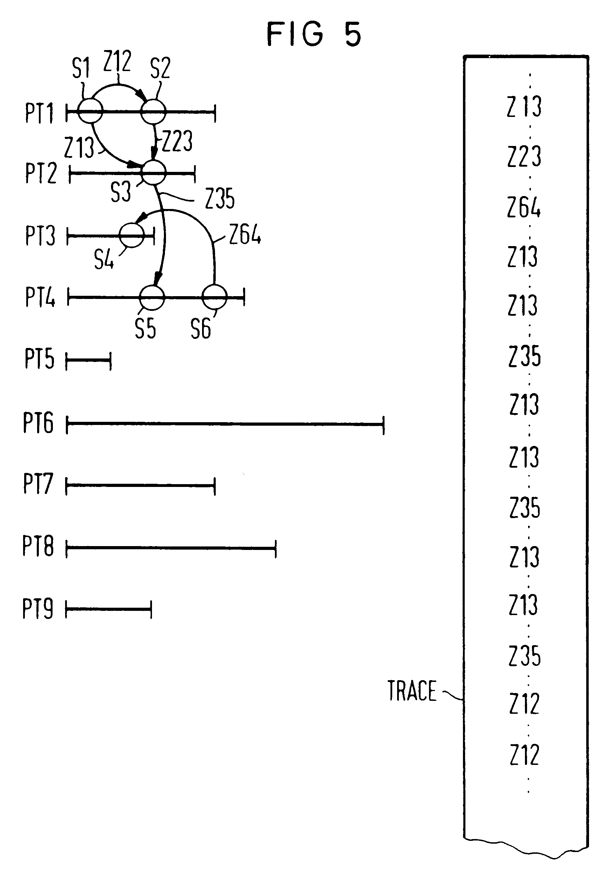

Die Fig. 5 zeigt ein Beispiel für Speicherzugriffe Z12, Z13, Z23, Z35, usw. von Programmteilen PT1, PT2, PT3 usw., welche im Verfahrensschritt V1000 aufbereitet werden.

An einer Programmstelle S1 im Programmteil PT1 erfolgt der Speicherzugriff Z12 auf eine Programmstelle S2 im Programmteil PT1. Dies kann beispielsweise ein Datenzugriff sein zum Lesen oder Ändern von Dateninhalten. Ebenso kann bei diesem Speicherzugriff eine Instruktion geladen werden, beispielsweise bei einer Sprunginstruktion an der Programmstelle S1 zur Programmstelle S2.

An der Programmstelle S1 im Programmteil PT1 erfolgt der Speicherzugriff Z13 auf eine weitere Programmstelle S3 im Programmteil PT2. Die Programmstelle S1 kann demzufolge beispielsweise ein registerindizierter Datenzugriff auf die Dateninhalte der Programmstelle S2 oder S3 sein. Es kann die Programmstelle S1 bei diesem Ausführungsbeispiel ebenso eine beispielsweise registerindizierte Sprunginstruktion sein zur Programmstelle S2 oder S3.

An der Programmstelle S2 im Programmteil PT1 erfolgt der Speicherzugriff Z23 auf die Programmstelle S3 im Programmteil PT2, beispielsweise als Datenzugriff oder Sprunginstruktion.

An der Programmstelle S3 im Programmteil PT2 erfolgt der Speicherzugriff Z35 auf eine Programmstelle S5 im Programmteil PT4, beispielsweise als Datenzugriff oder Sprunginstruktion.

An der Programmstelle S6 im Programmteil PT4 erfolgt der Speicherzugriff Z64 auf eine Programmstelle S4 im Programmteil PT3, beispielsweise als Datenzugriff oder Sprunginstruktion.

Zusätzlich gibt es in den Programmteilen PT1 bis PT9 noch weitere Speicherzugriffe sowie weitere derartige Programmstellen, welche bei der Erläuterung nicht näher betrachtet werden.

Die Tabelle 1 zeigt die Länge der Programmteile dieses Ausführungsbeispieles.

Tabelle 1

| Programmteil | Länge |
| --- | --- |
| PT1 | 522 |
| PT2 | 350 |
| PT3 | 270 |
| PT4 | 579 |
| PT5 | 115 |
| PT6 | 823 |
| PT7 | 502 |
| PT8 | 612 |
| PT9 | 253 |

Beim Verfahrensschritt V2000 wird bei einer Simulation des Ablaufs des Programmes anhand dieser Programmteile ein Trace-Protokoll TRACE erhalten, in welchem Speicherzugriffe aufgelistet werden gemäß ihrer Reihenfolge beim Ablauf des Programmes. In diesem Trace-Protokoll TRACE ist bei diesem Ausführungsbeispiel der Speicherzugriff Z12 zweimal enthalten, der Speicherzugriff Z13 siebenmal, der Speicherzugriff Z23 einmal, der Speicherzugriff Z35 dreimal, der Speicherzugriff Z64 einmal, neben weiteren Speicherzugriffen, welche bei der Erläuterung nicht näher betrachtet werden.

Die betrachteten Speicherzugriffe Z12, Z13, Z23, Z35, Z64 werden in einer Tabelle 2 aufgelistet. Es ist angegeben, von welchem Programmteil zu welchem Programmteil der Speicherzugriff an den betroffenen Programmstellen erfolgt. Ebenso ist angegeben, wie oft jeder Speicherzugriff im Trace-Protokoll enthalten ist.

Tabelle 2

| Speicherzugriff | von | nach | Anzahl |
|---|---|---|---|
| Z12 | PT1/S1 | PT1/S2 | 2 |
| Z13 | PT1/S1 | PT2/S3 | 7 |
| Z23 | PT1/S2 | PT2/S3 | 1 |
| Z35 | PT2/S3 | PT4/S5 | 3 |
| Z64 | PT4/S6 | PT3/S4 | 1 |

In einer Tabelle 3 werden die Programmstellen der Speicherzugriffe aufgelistet. Zu jeder betrachteten Programmstelle der Programmteile wird die Hauptspeicheradresse angegeben, indem jeweils von einer Beginnadresse des Programmteiles ausgegangen wird.

Tabelle 3

| Programmstelle | Hauptspeicheradresse |
|---|---|
| PT1/S1 | ADR.S1 = ADR.PT1 + 66 |
| PT1/S2 | ADR.S2 = ADR.PT1 + 335 |
| PT2/S3 | ADR.S3 = ADR.PT2 + 56 |
| PT3/S4 | ADR.S4 = ADR.PT3 + 154 |
| PT4/S5 | ADR.S5 = ADR.PT4 + 206 |
| PT4/S6 | ADR.S6 = ADR.PT4 + 407 |

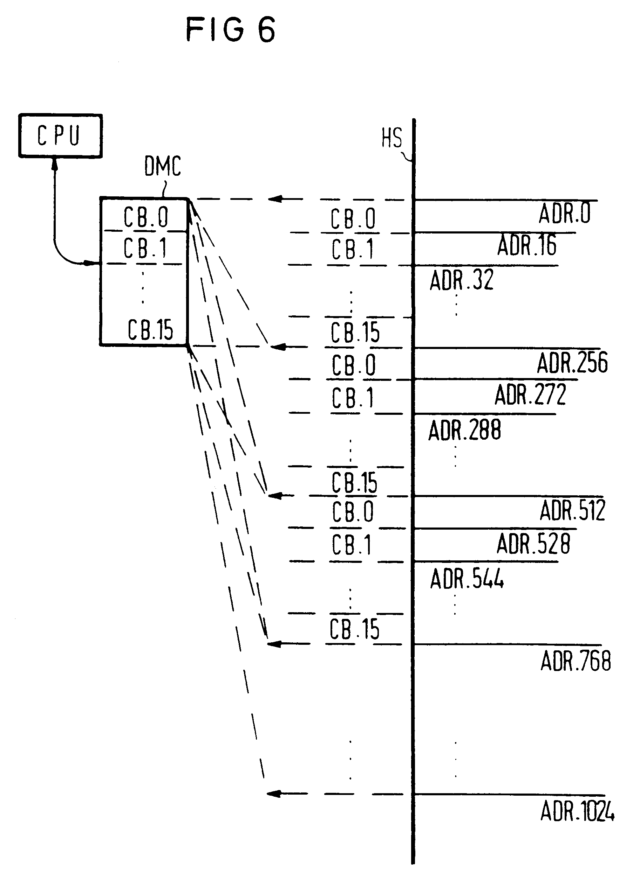

Die Fig. 6 zeigt ein Cache DMC, auf welches ein Hauptspeicher HS abgebildet wird. Bei diesem Ausführungsbeispiel wird ein direkt abbildendes Direct-Map-Cache DMC zugrundegelegt, in dessen 16 Cache-Blöcken CB.0, CB.1, ... CB.15 je 16 Worte des Hauptspeichers HS ladbar sind. Gemäß des direkten Abbildungsschemas werden die ersten 16 Worte, beginnend an einer betrachteten Adresse ADR.0 also die Speicherworte ADR.0 bis ADR.15, jeweils nur in den ersten Cache-Block CB.0 geladen. Die nächsten 16 Worte, beginnend an einer Adresse ADR.16, also die Speicherworte ADR.16 bis ADR.31, werden jeweils nur in den zweiten Cache-Block CB.1 geladen, usw.. Beginnend an einer Adresse ADR.256, sowie beginnend an einer Adresse ADR.512, usw., werden die jeweils nächsten 16 Worte ebenso jeweils nur in den Cache-Block CB.0 geladen. Beginnend an einer Adresse ADR.272, sowie beginnend an einer Adresse ADR.528, usw., werden die jeweils nächsten 16 Worte ebenso jeweils nur in den Cache-Block CB.1 geladen. Und so weiter.

Falls demzufolge ein Programm in den Hauptspeicher HS geladen ist, und von einem Prozessor CPU abgearbeitet werden soll, so werden zunächst blockweise Teile des Programmes aus dem langsameren Hauptspeicher HS in die Cache-Blöcke CB des schnelleren Direct-Map-Cache DMC geladen bei diesem Ausführungsbeispiel. Zwischen dem Prozessor CPU und den in den Cache-Blöcken geladenen Teilen des Programmes wird die Prozessbearbeitung beim Ablauf des Programmes ausgeführt. Mittels einer Write-Back-Funktion werden vom Prozessor CPU in den Cache-Blöcken CB ausgeführte Änderungen von Dateninhalten zur Aktualisierung der Dateninhalte im Hauptspeicher HS nachgezogen.

Beim Ablauf des Programmes können später benutzte Teile des Programmes bereits vorzeitig in den jeweiligen Cache-Block CB geladen werden. Dies kann insbesondere dann erfolgen, wenn der jeweils zum Laden des jeweiligen Teiles des Programmes beim Direct-Map-Cache DMC jeweils zu verwendende Teil des Cache-Blockes CB ein ausreichend langes Zeitintervall beim Ablauf des Programmes nicht verwendet wird,

8

so daß in diesem Zeitintervall aus dem langsameren Hauptspeicher HS jene Programmteile rechtzeitig in den jeweiligen Cache-Block CB geladen werden können.

Beispielsweise können bei einem Ablauf des Programmes, welcher an der Adresse ADR.0 beginnt, sequentiell die Instruktionen, welche in den Cache-Block CB.0 geladen sind, bis zu einer beispielsweise betrachteten Hauptspeicheradresse ADR.11 abgearbeitet werden vom Prozessor CPU. Es ist beispielsweise an der Hauptspeicheradresse ADR.11 eine Sprunginstruktion zu einer Instruktion an der Hauptspeicheradresse ADR.274 zu bearbeiten. Somit können während des Zeitintervalls, währenddessen die Instruktionen zwischen den Hauptspeicheradressen ADR.0 und ADR.11 im Cache-Block CB.0 bearbeitet werden, Teile des Programmes von den Haupspeicheradressen ADR.272 bis ADR.287 aus dem Hauptspeicher HS rechtzeitig in den Cache-Block CB.1 geladen werden.

Falls hingegen bei diesem soeben betrachteten Fall an der Hauptspeicheradresse ADR.11 beispielsweise eine Sprunginstruktion zur Hauptspeicheradresse ADR. 258 vorhanden sein sollte, so wäre es beim Direct-Map-Cache DMC dieses Ausführungsbeispieles nicht möglich, rechtzeitig den danach benötigten Programmteil von den Hauptspeicheradressen ADR.256 bis ADR.271 in den hierfür vorgesehenen Cache-Block CB.0 zu laden, da dieser Cache-Block CB.0 durch den Prozessor CPU benutzt wird zur Prozessbearbeitung. Nach dem Bearbeiten der Sprunginstruktion gemäß Hauptspeicheradresse ADR.11, welche im Cache-Block CB.0 erfolgt, müßte der Prozessor CPU Wartezyklen einlegen, und abwarten, bis aus dem langsameren Hauptspeicher HS jener Teil des Programmes, an den Hauptspeicheradressen beispielsweise von ADR.256 bis ADR.271 in den Cache-Block CB.0 geladen ist.

Ein derartiger Speicherzugriff gemäß der Sprunginstruktion von der Hauptspeicheradresse ADR.11 zum Laden der Instruktion von der Hauptspeicheradresse ADR.258 würde in diesem Fall eine Verzögerung der Prozessbearbeitung, also einen Cache-Miss verursachen.

Gemäß einer anfangs vorliegenden Anordnung, welche sich beispielsweise aus einer Reihenfolge beim Aufbereiten dieser Programmteile ergibt, sollen diese als vorerst im Hauptspeicher HS angeordnet betrachtet werden. Diese anfängliche Anordnung wird im Verfahrensschritt V3000 des Variierungsverfahrens bezüglich zu erwartender Cache-Misses variiert und untersucht.

Dabei wird das Trace-Protokoll adaptiert, indem die betrachteten Speicherzugriffe Z12, Z13, Z23, Z35, Z64, welche im Trace-Protokoll TRACE der Fig. 5 dargestellt sind, und welche in der Tabelle 2 aufgelistet sind, und deren Hauptspeicheradressen in der Tabelle 3 aufgelistet sind, bearbeitet werden. Die Länge der Programmteile im Hauptspeicher HS ist in der Tab. 1 angegeben. Beginnend an der betrachteten Hauptspeicheradresse ADR.0 ist bei der anfänglich vorliegenden Anordnung der Programmteil PT1 angeordnet, dessen Beginnadresse ADR.PT1 gleich der Hauptspeicheradresse ADR.0 ist. Gemäß der Länge des Programmteiles PT1 von 522 Worten, welche der Tabelle 1 entnehmbar ist, beginnt der Programmteil PT2 bei dieser Anordnung an der Hauptspeicheradresse ADR.522, welche gleich ist einer Beginnadresse ADR.PT2 des Programmteiles PT2. Gemäß der Länge des Programmteiles PT2 von 350 Worten, welche ebenso der Tabelle 1 entnehmbar ist, beginnt der Programmteil PT3 an der Hauptspeicheradresse ADR.872, welche somit gleich ist dessen Beginnadresse ADR.PT3. Gemäß der Länge des Programmteiles PT3 von 270 Worten beginnt der Programmteil PT4 an der Hauptspeicheradresse ADR.1142, welche gleich ist dessen Beginnadresse ADR.PT4. Bei dieser Anordnung, bei welcher diese Programmteile somit lückenlos aneinandergefügt sind, belegen diese Programmteile den Hauptspeicher bis vor die Hauptspeicheradresse ADR.1721.

Gemäß Tabelle 3 befindet sich demzufolge die Programmstelle S1 bei dieser Anordnung an der Hauptspeicheradresse ADR.66, und die Programmstelle 52 an der Hauptspeicheradresse ADR.335, die Programmstelle S3 an der Hauptspeicheradresse ADR.578, die Programmstelle S4 an der Hauptspeicheradresse ADR.1026, die Programmstelle S5 an der Hauptspeicheradresse ADR.1348, und die Programmstelle S6 an der Hauptspeicheradresse ADR.1549. Diese Programmstellen können vom Prozessor CPU nur dann bearbeitet werden, wenn sie in das Direct-Map-Cache DMC geladen sind. Beim Variierungsverfahren V3000 wird ermittelt, in welchen Cache-Block CB diese Programmstellen jeweils geladen werden sollen. Jede dieser Programmstellen kann gemäß des Abbildungsschemas des Direct-Map-Cache jeweils nur in einen der Cache-Blöcke CB des Direct-Map-Cache DMC geladen werden. Dies ist in Tabelle 4 dargestellt.

Tabelle 4

| Programmstelle | Hauptspeicheradresse | Cacheblock |
|----------------|----------------------|------------|
| PT1/S1 | ADR.66 | CB.4 |
| PT1/S2 | ADR.335 | CB.4 |
| PT2/S3 | ADR.578 | CB.4 |
| PT3/S4 | ADR.1026 | CB.0 |
| PT4/S5 | ADR.1348 | CB.4 |
| PT4/S6 | ADR.1549 | CB.0 |

Beim Variierungsverfahren V3000 sollen für diese Anordnung die beim Ablauf des Programmes erwarteten Cache-Misses prognostiziert werden, insbesondere zu den im Trace-Protokoll TRACE in Fig. 5 auszugsweise dargestellten und betrachteten Speicherzugriffen, welche der Tabelle 2 entnehmbar sind. Aufgrund des Abbildungsschemas des Direct-Map-Cache DMC ist es nicht erforderlich aufgrund des Trace-Protokolls TRACE eine Reihenfolge der Speicherzugriffe zu berücksichtigen, um daraus eine Belegung der Cache-Blöcke zu simulieren, so daß daraus Cache-Misses prognostiziert werden können. Zumal da beim Direct-Map-Cache dieses Ausführungsbeispieles stets bekannt ist, in welchen der Cache-Blöcke die jeweilige Programmstelle jeweils zu laden ist, genügt es insbesondere anhand von Tabelle 2 für jeden der aufgelisteten Speicherzugriffe zu überprüfen, ob die beiden jeweils betroffenen Programmstellen insbesondere gemäß Tabelle 4 in den selben Cache-Block geladen werden müssen, was einen Cache-Miss bedeutet. Zur besseren Erläuterung ist dies in Tabelle 5 dargestellt.

Tabelle 5

| Speicher-zugriff | von | nach | Anzahl | Cache-Miss |
|------------------|-----|------|--------|------------|
| Z12 | ADR.66/CB.4 | ADR.335/CB.4 | 2 | JA |
| Z13 | ADR.66/CB.4 | ADR.578/CB.4 | 7 | JA |
| Z23 | ADR.335/CB.4 | ADR.578/CB.4 | 1 | JA |
| Z35 | ADR.578/CB.4 | ADR.1348/CB.4 | 3 | JA |
| Z64 | ADR.1549/CB.0 | ADR.1026/CB.0 | 1 | JA |

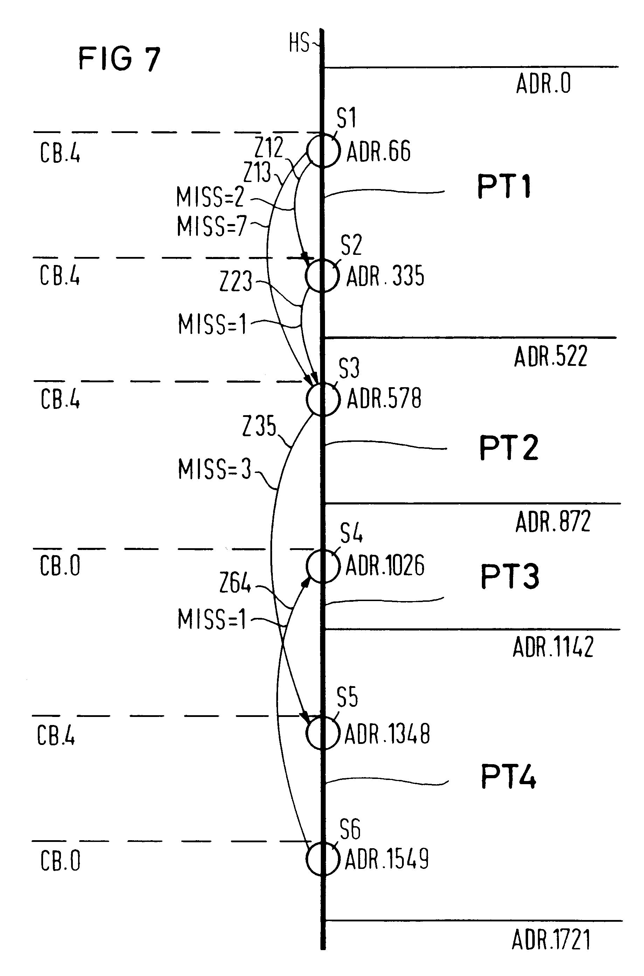

Daraus ergeben sich, wie in der Fig. 7 dargestellt, betrachtete Cache-Misses MISS, deren jeweils angegebene Anzahl mit der Tabelle 5 übereinstimmt.

Beim Variierungsverfahren V3000 wird geprüft, ob Cache-Misses vorliegen. Dies ist bei dieser Anordnung der Fall, insbesondere in einer Anzahl, welche nur für die gemäß Tabelle 5 betrachteten Speicherzugriffe bereits so groß ist, daß ein Variieren der Anordnungbei diesem Ausführungsbeispiel erfolgen soll.

Beim Variierungsverfahren V3000 sind aus den im Verfahrensschritt V1000 aufbereiteten Programmteilen, PT1 bis PT9 bei diesem Ausführungsbeispiel, Teilfolgen zu betrachten und einzuteilen, welche zu untersuchen und zu variieren sind. Bei diesem Ausführungsbeispiel sind dies zwei Teilfolgen, und zwar blockweise zusammenhängende Teilfolgen. Insbesondere bilden die Programmteile PT1, PT2, PT3, PT4 eine erste Teilfolge, und die Programmteile PT5, PT6, PT7, PT8, PT9 eine zweite Teilfolge. Für die betrachtete, im Hauptspeicher vorliegende Anordnung (PT1, PT2, PT3, PT4), (PT5, PT6, PT7, PT8, PT9), bei welcher die beiden Teilfolgen in Klammern angegeben sind, ist das Trace-Protokoll adaptierbar, und es sind Cache-Misses prognostizierbar, wie zuvor erläutert. Eine globale Anzahl von Cache-Misses ist zu prognostizieren, also ohne eine Aufschlüsselung betreffend Teilfolge, Programmteil oder Programmstelle als ein Verursacher von Cache-Misses.

Zur untersuchten Anordnung ist die gesamte Anzahl von prognostizierten Cache-Misses anzugeben.

Die beiden betrachteten Teilfolgen sind zu variieren. Dies soll zunächst so erfolgen bei diesem Ausführungsbeispiel, daß jeder Programmteil der ersten Teilfolge an die zweite Teilfolge anschließend verschoben wird, und daß diese jeweiligen Anordnungen zu untersuchen sind betreffend globaler Anzahl von Cache-Misses. Diese Untersuchungsergebnisse sind in der Tabelle 6 dargestellt.

Tabelle 6

| untersuchte Anordnung der Programmteile für die variierte erste Teilfolge (PT1, PT2, PT3, PT4) | Cache-Misses |
|---|---|
| (PT1, PT2, PT3), PT4, (PT5, PT6, PT7, PT8, PT9) | MISS = ANZ4 |
| (PT1, PT2, PT4), PT3, (PT5, PT6, PT7, PT8, PT9) | MISS = ANZ3 |
| (PT1, PT3, PT4), PT2, (PT5, PT6, PT7, PT8, PT9) | MISS = ANZ2 |
| (PT2, PT3, PT4), PT1, (PT5, PT6, PT7, PT8, PT9) | MISS = ANZ1 |

Die zu jeder untersuchten Anordnung der Programmteile beim Variieren der ersten Teilfolge erhaltenen globalen Anzahlen von prognostizierten Cache-Misses sind untereinander zu vergleichen. Bei diesem Ausführungsbeispiel ist die prognostizierte Anzahl ANZ3 am niedrigsten. Demzufolge wird der Programmteil PT3 aus der ersten Teilfolge ausgegliedert und in die zweite Teilfolge eingegliedert. Dies kann markiert werden, beispielsweise durch ein Unterstreichen des Programmteiles PT3, wodurch erkennbar ist, daß dieser Programmteil nicht mehr in die erste Teilfolge eingegliedert werden soll, aus welcher er ausgegliedert wurde. In gleicher Weise können auch von der zweiten Teilfolge ausgegliederte und in die erste Teilfolge eingegliederte Programmteile markiert werden beispielsweise zur Vermeidung eines nur scheinbaren Variierens.

Bei diesem Ausführungsbeispiel werden ausgegliederte und eingegliederte Programmteile nicht markiert. Es wird insbesondere das nur scheinbare Variieren dadurch vermieden, daß beim Ausgliedern die jeweilige Position des Programmteiles innerhalb der variierten Teilfolge geprüft wird. Demzufolge soll ein an letzter Stelle der ersten Teilfolge sich befindender Programmteil, sowie ein an erster Stelle der zweiten Teilfolge sich befindender Programmteil jeweils nicht ausgegliedert werden.

Wäre also beispielsweise in der Tabelle 6 die Anzahl ANZ4 am niedrigsten, so wäre der Programmteil PT4 auf Ausgliedern zu überprüfen. Da dieser jedoch innerhalb der variierten ersten Teilfolge (PT1, PT2, PT3, PT4) an letzter Stelle ist, würde sein Ausgliedern unterbleiben.

Gemäß Tabelle 6 ist bei diesem Ausführungsbeispiel die Anzahl ANZ3 am niedrigsten, und es wird der Programmteil PT3 aus der ersten Teilfolge ausgegliedert und in die zweite Teilfolge eingegliedert, so daß für eine Anordnung der Programmteile im Hauptspeicher folgende Reihenfolge vorliegt:
(PT1, PT2, PT4), (PT3, PT5, PT6, PT7, PT8, PT9)

Bei einem Vergleich von Figur 7 erkennt man, daß die Programmteile PT3 und PT4 vertauscht angeordnet sind. Der Programmteil PT4 hat als Beginnadresse ADR.PT4 jetzt die Hauptspeicheradresse ADR.872. Gemäß Tabelle 3 ist die Programmstelle S5 jetzt auf einer Hauptspeicheradresse ADR.1078, und die Programmstelle S6 ist jetzt auf einer Hauptspeicheradresse ADR.1279. Der Programmteil PT3 hat als Beginnadresse ADR.PT3 jetzt eine Hauptspeicheradresse ADR.1451, und die Programmstelle S4 ist jetzt auf einer Hauptspeicheradresse ADR.1605. Im Vergleich mit der Tabelle 5 erkennt man, daß der Speicherzugriff Z35 jetzt von ADR.578/CB.4 erfolgt nach ADR.1076/CB.3, sowie daß der Speicherzugriff Z64 jetzt von ADR.1279/CB.15 nach ADR.1605/CB.4 erfolgt. In beiden Fällen sind die vom Speicherzugriff Z35 oder Z64 jeweils betroffenen Cacheblöcke CB unterschiedlich. Bei dieser Anordnung ist für keinen der Speicherzugriffe Z35 oder Z64 ein Cache-Miss zu prognostizieren. Diese betrachteten Speicherzugriffe bilden jedoch nur einen kleinen Auszug von allen Speicherzugriffen des Trace-Protokolls, für welche eine gesamte Anzahl von Cache-Misses jeweils zu prognostizieren ist beim Untersuchen einer variierten Anordnung.

Anschließend ist die zweite Teilfolge zu variieren. Jeder Programmteil der zweiten Teilfolge wird an die erste Teilfolge anschließend verschoben. Die dabei erhaltenen Anordnungen werden untersucht betreffend globaler Anzahl von Cache-Misses. Diese Untersuchungsergebnisse sind in der Tabelle 7 dargestellt.

Tabelle 7

| untersuchte Anordnung der Programmteile für die variierte zweite Teilfolge (PT3, PT5, PT6, PT7, PT8, PT9) | Cache-Misses |
|---|---|
| (PT1, PT2, PT4), PT3, (PT5, PT6, PT7, PT8, PT9) | MISS = ANZ3 |
| (PT1, PT2, PT4), PT5, (PT3, PT6, PT7, PT8, PT9) | MISS = ANZ5 |
| (PT1, PT2, PT4), PT6, (PT3, PT5, PT7, PT8, PT9) | MISS = ANZ6 |
| (PT1, PT2, PT4), PT7, (PT3, PT5, PT6, PT8, PT9) | MISS = ANZ7 |
| (PT1, PT2, PT4), PT8, (PT3, PT5, PT6, PT7, PT9) | MISS = ANZ8 |
| (PT1, PT2, PT4), PT9, (PT3, PT5, PT6, PT7, PT8) | MISS = ANZ9 |

Die zu jeder untersuchten Anordnung der Programmteile beim Variieren der zweiten Teilfolge erhaltenen globalen Anzahlen von prognostizierten Cache-Misses sind untereinander zu vergleichen. Bei diesem Ausführungsbeispiel ist die prognostizierte Anzahl ANZ7 am niedrigsten. Demzufolge wird der Programmteil PT7 aus der zweiten Teilfolge ausgegliedert und in die erste Teilfolge eingegliedert, so daß jetzt für eine Anordnung der Programmteile im Hauptspeicher folgende Reihenfolge vorliegt:
(PT1, PT2, PT4, PT7), (PT3, PT5, PT6, PT8, PT9)

Es wird untersucht, ob das Variierungsverfahren V3000 fortzusetzen ist, ob die prognostizierte Anzahl beispielsweise ausreichend niedrig ist, oder ob bereits eine bestimmte Anzahl von Variierungsschritten ausgeführt ist, so daß abgebrochen werden soll. Ebenso kann vorgesehen sein, daß ein Gleichgewichtskriterium überprüft wird, also ob die Teilfolgen bezüglich ihrer Größe unverhältnismäßig unterschiedlich sind.

Beispielsweise abhängig von einem erzielten Gewinn beim Variieren der Anordnung, also aufgrund eines Vergleichs beispielsweise von ANZ4 und ANZ7, kann entschieden werden, ob die zuletzt variierten Teilfolgen weiter variiert und untersucht werden sollen, oder ob neue Teilfolgen, insbesondere innere Teilfolgen gebildet, variiert und untersucht werden sollen oder können.

Bei diesem Ausführungsbeispiel werden innere Teilfolgen gebildet. Aus der ersten Teilfolge (PT1, PT2, PT4, PT7) wird eine innere erste Teilfolge (PT1, PT2) und eine innere zweite Teilfolge (PT4, PT7) gebildet. Aus der zweiten Teilfolge (PT3, PT5, PT6, PT8, PT9) wird eine weitere innere erste Teilfolge (PT3, PT5) und eine weitere innere zweite Teilfolge (PT6, PT8, PT9) gebildet. Diese inneren Teilfolgen werden variiert und untersucht. Jeder Programmteil von einer der inneren Teilfolgen wird an die andere der inneren Teilfolgen ausschließend verschoben. Die dabei erhaltenen Anordnungen werden untersucht betreffend Cache-Misses. Daraus abgeleitet werden Programmteile innerhalb der inneren Teilfolgen ausgegliedert und eingegliedert. Die untersuchten Anordnungen sind in der Tabelle 8 dargestellt beim Variieren folgender Teilfolgen:
((PT1, PT2), (PT4, PT7), (PT3, PT5), (PT6, PT8, PT9))

Tabelle 8

| |
| --- |
| Teilfolge (PT1, PT2) variiert und untersucht:<br>((PT1), PT2, (PT4, PT7)), ((PT3, PT5), (PT6, PT8, PT9))<br>((PT2), PT1, (PT4, PT7)), ((PT3, PT5), (PT6, PT8, PT9))<br>Ergebnis: PT2, es wird nicht ausgegliedert |
| Teilfolge (PT3, PT5) variiert und untersucht:<br>((PT1, PT2), (PT4, PT7)), ((PT3), PT5, (PT6, PT8, PT9))<br>((PT1, PT2), (PT4, PT7)), ((PT5), PT3, (PT6, PT8, PT9))<br>Ergebnis: PT3, es wird ausgegliedert |
| Teilfolge (PT4, PT7) variiert und untersucht:<br>((PT1, PT2), PT4, (PT7)), ((PT5), (PT3, PT6, PT8, PT9))<br>((PT1, PT2), PT7, (PT4)), ((PT5), (PT3, PT6, PT8, PT9))<br>Ergebnis: PT7, es wird ausgegliedert |
| Teilfolge (PT3, PT6, PT8, PT9) variiert und untersucht:<br>((PT1, PT2, PT7), (PT4)), ((PT5), PT3, (PT6, PT8, PT9))<br>((PT1, PT2, PT7), (PT4)), ((PT5), PT6, (PT3, PT8, PT9))<br>((PT1, PT2, PT7), (PT4)), ((PT5), PT8, (PT3, PT6, PT9))<br>((PT1, PT2, PT7), (PT4)), ((PT5), PT9, (PT3, PT6, PT8))<br>Ergebnis: PT3, es wird nicht ausgegliedert |

Demzufolge werden zunächst die inneren jeweils ersten Teilfolgen (PT1, PT2) und (PT3, PT5) variiert und untersucht. Beim Variieren und Untersuchen der Teilfolge (PT1, PT2) konnte keine Verringerung der prognostizierten Cache-Misses erzielt werden, und es erfolgt keine Änderung der Anordnung, und die Anzahl ANZ7 bleibt gleich wie zuvor. Bei diesem Ausführungsbeispiel werden bereits untersuchte Anordnungen notiert und nicht erneut untersucht. Dies trifft bei der ersten in der Tabelle 8 angegebenen Anordnung zu, welche bereits in der Tabelle 7 aufscheint mit der Anzahl ANZ7 von prognostizierten Cache-Misses. Beim Variieren der Teilfolge (PT1, PT2) wird somit nur die zweite in der Tabelle 8 angegebene Anordnung untersucht, indem die Speicherzugriffe des Trace-Protokolls dieser Anordnung angepaßt und deren Cache-Misses prognostiziert werden mit einer Anzahl ANZ10, welche bei diesem Ausführungsbeispiel größer ist als die Anzahl ANZ7. Diese Anzahl ANZ7 wird auch für die dritte in der Tabelle 8 angegebene Anordnung, welche ebenso in der Tabelle 7 bereits angegeben ist, nicht mehr erneut ermittelt bei diesem Ausführungsbeispiel. Beim Variieren der Teilfolge (PT3, PT5) wird für die vierte in der Tabelle 8 angegebene Anordnung eine Anzahl ANZ11 von Cache-Misses prognostiziert, welche kleiner ist als die Anzahl ANZ7. Demzufolge wird der Programmteil PT3 aus der Teilfolge (PT3, PT5) ausgegliedert und in die Teilfolge (PT6, PT8, PT9) eingegliedert.

Beim Variieren der Teilfolge (PT4, PT7) wird für die fünfte in der Tabelle 8 angegebene Anordnung der Programmteile erkannt, daß deren prognostizierte Anzahl von Cache-Misses bereits ermittelt ist, und zwar gleich ANZ11. Für die sechste in der Tabelle 8 angegebene Anordnung wird deren Anzahl von prognostizierten Cache-Misses ermittelt mit ANZ12, welche kleiner ist als ANZ11. Demzufolge wird der Programmteil PT7 aus der Teilfolge (PT4, PT7) ausgegliedert und in die Teilfolge (PT1, PT2) eingegliedert.

Beim Variieren der Teilfolge (PT3, PT6, PT8, PT9) wird für die siebente in der Tabelle 8 angegebene Anordnung der Programmteile erkannt, daß deren prognostizierte Anzahl von Cache-Misses bereits ermittelt ist, und zwar gleich ANZ12. Für die achte in der Tabelle 8 angegebene Anordnung wird deren Anzahl von prognostizierten Cache-Misses ermittelt mit ANZ13, welche größer ist als ANZ12. Für die neunte Anordnung wird eine Anzahl ANZ14 ermittelt, größer als ANZ12. Für die zehnte Anordnung wird eine Anzahl ANZ15 ermittelt, größer als ANZ12. Demzufolge wird erkannt, daß der Programmteil PT3 in der soeben variierten und untersuchten inneren zweiten Teilfolge (PT3, PT6, PT8, PT9) an erster Stelle ist. Deshalb wird der Programmteil PT3 zur Vermeidung eines nur scheinbaren Variierens nicht ausgegliedert aus der Teilfolge (PT3, PT6, PT8, PT9), und diese Teilfolge verbleibt ohne Änderung.

Nach Variieren und Untersuchen gemäß Tabelle 8 liegt somit mit einer prognostizierten Anzahl ANZ12 von prognostizierten Cache-Misses folgende Anordnung der Programmteile im Hauptspeicher vor:
((PT1, PT2, PT7), (PT4)), ((PT5, PT3), (PT6, PT8, PT9))

Da noch keine ausreichend niedrige Anzahl von prognostizierten Cache-Misses vorliegt, soll bei diesem Ausführungsbeispiel weiter variiert und untersucht werden. Es wird die bisherige Einteilung in Teilfolgen und innere Teilfolgen untersucht, ob weitere innere Teilfolgen innerhalb der vorliegenden inneren Teilfolgen gebildet werden können. Dies ist insbesondere bei der Teilfolge (PT4) nicht möglich. Deshalb wird bei diesem Ausführungsbeispiel die bisherige Einteilung der Teilfolgen aufgegeben, und es liegt somit folgende Anordnung der Programmteile im Hauptspeicher vor:
PT1, PT2, PT7, PT4, PT5, PT3, PT6, PT8, PT9

Diese Anordnung der Programmteile wird erneut in zwei Teilfolgen eingeteit:
(PT1, PT2, PT7, PT4), (PT5, PT3, PT6, PT8, PT9)

Wie bereits anhand von Tabelle 6 und Tabelle 7 erläutert, werden diese beiden Teilfolgen variiert und untersucht. Danach liegt bei diesem Ausführungsbeispiel mit einer Anzahl ANZX, kleiner als ANZ12, von prognostizierten Cache-Misses folgende Anordnung der Programmteile Im Hauptspeicher vor.
(PT2, PT7, PT4), (PT1, PT5, PT3, PT6, PT8, PT9)

Es wird erkannt, daß die erste Teilfolge (PT2, PT7, PT4) zu klein ist, und deshalb nicht mehr in innere Teilfolgen eingeteilt werden soll, so daß die vorliegende Einteilung in Teilfolgen fallengelassen wird. Es wird die vorliegende Anordnung der Programmteile
PT2, PT7, PT4, PT1, PT5, PT3, PT6, PT8, PT9
erneut eingeteilt in zwei Teilfolgen:
(PT2, PT7, PT4, PT1, PT5), (PT3, PT6, PT8, PT9)

Diese werden, wie bereits erläutert, variiert und untersucht. Danach liegt bei diesem Ausführungsbeispiel mit einer Anzahl ANZY, kleiner als ANZX, von prognostizierten Cache-Misses folgende Anordnung der Programmteile im Hauptspeicher vor:
(PT7, PT4, PT1, PT5, PT9), (PT2, PT3, PT6, PT8)

Diese wird erneut in innere Teilfolgen bei diesem Ausführungsbeispiel wie folgt unterteilt:
((PT7, PT4), (PT1, PT5, PT9)), ((PT2, PT3), (PT6, PT8))

Diese inneren Teilfolgen, wie bereits anhand von Tabelle 8 erläutert, werden variiert und untersucht. Und so fort, bis eine ausreichend niedrige Anzahl von prognostizierten Cache-Misses erreicht ist, oder bis eine ausreichend große Anzahl von Anordnungen untersucht ist.

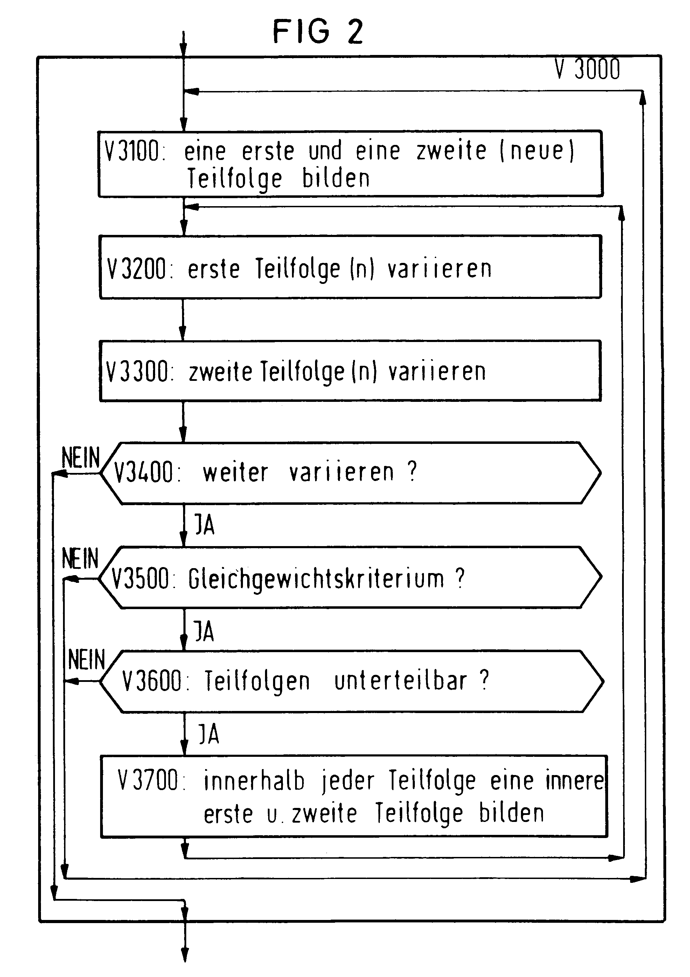

Die Figur 2 zeigt ein Beispiel in Form eines Übersichtsflußdiagrammes für den Verfahrensschritt V3000 des Variierungsverfahrens.

Es wird der Verfahrensschritt V3100 ausgeführt. Die aktuell vorliegende Anordnung der Programmteile im Hauptspeicher, also anfangs etwa gemäß ihrer Reihenfolge beim Aufbereiten im Verfahrensschritt V1000, wird in eine erste und in eine zweite Teilfolge eingeteilt. Falls bereits Anordnungen mittels Teilfolgen variiert und untersucht sind, so wird die bisherige Einteilung in Teilfolgen oder innere Teilfolgen fallen gelassen, und es wird die aktuell vorliegende Anordnung der Programmteile erneut in eine erste und eine zweite Teilfolge eingeteilt. Dabei kann es auch vorkommen, daß die neue Einteilung mit der bisherigen gleich ist. Jede der beiden neuen Teilfolgen soll ungefähr eine gleiche Anzahl von Programmteilen enthalten. Entsprechend der Reihenfolge der Programmteile bei der aktuell vorliegenden Anordnung bildet ungefähr die erste Hälfte der Programmteile die erste Teilfolge und die restliche zweite Hälfte wird zur zweiten Teilfolge.

Es folgt der Verfahrensschritt V3200. Es wird die erste Teilfolge variiert und untersucht. Falls bei bereits eingeteilten inneren Teilfolgen mehrere innere erste Teilfolgen vorhanden sind, so wird nacheinander jede der inneren ersten Teilfolgen variiert und untersucht.

Es folgt der Verfahrensschritt V3300. Es wird die zweite Teilfolge variiert und untersucht. Falls bei bereits eingeteilten inneren Teilfolgen mehrere innere zweite Teilfolgen vorhanden sind, so wird nacheinander jede der inneren zweiten Teilfolgen variiert und untersucht.

Es folgt der Verfahrensschritt V3400. Es wird geprüft, ob die jetzt aktuell vorliegende Anordnung der Programmteile weiter variiert werden soll. Insbesondere, ob bereits eine ausreichend niedrige Anzahl von Cache-Misses erreicht ist, oder ob bereits eine ausreichend große Anzahl von Anordnungen untersucht ist. Falls dies der Fall ist, wird das Variierungsverfahren abgebrochen und der Verfahrensschritt V3000 wird beendet. Fallweise kann vorgesehen sein, daß geprüft wird, ob in den Verfahrensschritten V3200 und V3300 eine bezüglich Cache-Misses verbesserte Anordnung der Programmteile durch Variieren aufgefunden werden konnte, um dann abhängig davon das Variierungsverfahren fortzusetzen oder abzubrechen.

Falls beim Verfahrensschritt V3400 festgestellt wird, daß das Variierungsverfahren V3000 fortzusetzen ist, folgt der Verfahrensschritt V3500. Es wird geprüft, ob ein Gleichgewichtskriterium erfüllt ist. Dadurch soll vermieden werden, daß eine der Teilfolgen sehr wenige Programmteile, oder daß eine andere der Teilfolgen sehr viele Programmteile aufweist. Es sollen die einzelnen Teilfolgen abhängig von einer eventuell auch größeren Toleranz stets ungefähr gleich viele Programmteile enthalten. Falls das Gleichgewichtskriterium nicht erfüllt ist, so folgt der Verfahrensschritt V3100.

Falls das Gleichgewichtskriterium erfüllt ist, folgt der Verfahrensschritt V3600. Es wird geprüft, ob jede der vorliegenden Teilfolgen ausreichend groß ist, so daß eine Einteilung in innere Teilfolgen für diese Teilfolgen ausführbar ist. Dabei kann auch vorgesehen sein, daß besonders kleine Teilfolgen mit beispielsweise drei Programmteilen oder weniger, oder auch gar keinem Programmteil, eingegliedert werden in eine unmittelbar benachbarte Teilfolge. Ebenso kann auch vorgesehen sein, daß in diesem Fall generell keine weiteren inneren Teilfolgen mehr gebildet werden sollen. Falls keine weiteren inneren Teilfolgen einzuteilen sind, so folgt der Verfahrensschritt V3100.

Falls innere Teilfolgen eingeteilt werden sollen, folgt der Verfahrensschritt V3700. Es wird innerhalb jeder der aktuell vorliegenden Teilfolgen eine innere erste und eine innere zweite Teilfolge eingeteilt. Danach folgt der Verfahrensschritt V3200.

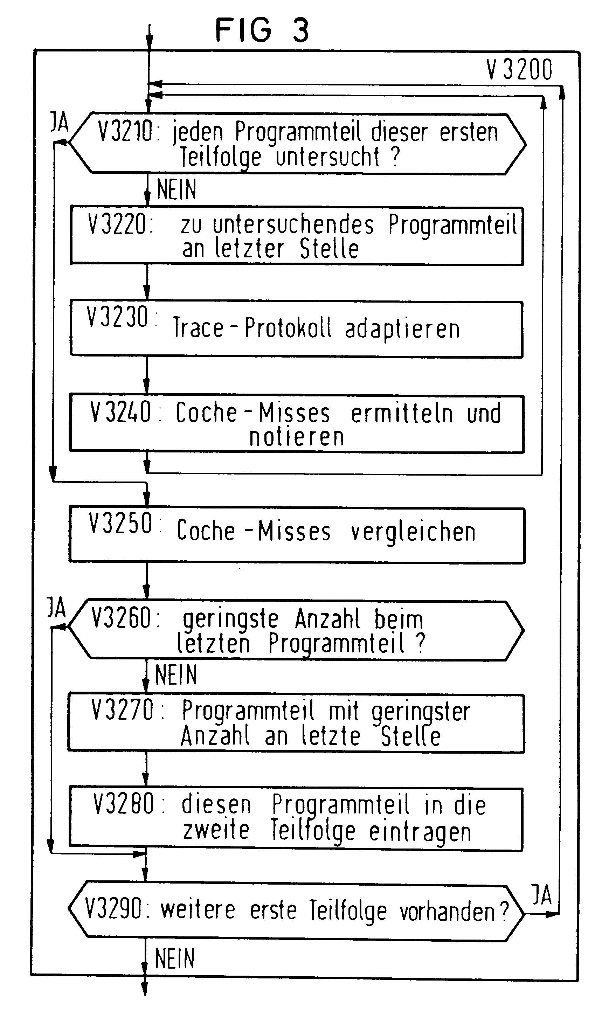

Die Figur 3 zeigt ein Beispiel in Form eines Übersichtsflußdiagrammes für den Verfahrensschritt V3200.

Es wird der Verfahrensschritt V3210 ausgeführt. Es wird die erste Teilfolge untersucht. Für den Fall, daß innere erste und zweite Teilfolgen bereits eingeteilt sind, wird beim Verfahrensschritt V3210 jede der inneren ersten Teilfolgen jeweils einmal unabhängig variiert und untersucht. Von der zu variierenden und zu untersuchenden ersten Teilfolge wird jeder ihrer Programmteile ausgewählt. Falls bereits alle Programmteile dieser Teilfolge ausgewählt worden sind, so folgt der Verfahrensschritt V3250.

Falls ein zu untersuchender Programmteil beim Verfahrensschritt V3210 ausgewählt ist, so folgt der Verfahrensschritt V3220. Die zu variierende Anordnung der Programmteile wird vorerst so verändert, daß der zu untersuchende Programmteil innerhalb seiner ersten Teilfolge verschoben wird an deren letzte Stelle. Danach folgt der Verfahrensschritt V3230. Es werden die Speicherzugriffe des Trace-Protokolls für die soeben vorerst veränderte Anordnung bezüglich des Adreßpegels aktualisiert und adaptiert, so daß daraus erkennbar ist, ob insbesondere bei gleichen Cacheblöcken Cache-Misses zu prognostizieren sind. Danach folgt der Verfahrensschritt V3240. Es werden für diese Anordnung Cache-Misses ermittelt und notiert. Danach folgt der Verfahrensschritt V3210.

Falls für eine der Teilfolgen jeder Programmteil untersucht ist, und dies beim Verfahrensschritt V3210 erkannt ist, so folgt der Verfahrensschritt V3250. Es werden für die beim Variieren dieser Teilfolgen untersuchten Programmteile die jeweils prognostizierten Cache-Misses untereinander verglichen.

Es folgt der Verfahrensschritt V3260. Es wird geprüft, ob eine geringste Anzahl von prognostizierten Cache-Misses bei jenem untersuchten Programmteil vorliegt, welcher in der variierten und untersuchten Teilfolge an letzter Stelle ist. Falls dies der Fall ist, wird dieser Programmteil aus der soeben variierten und untersuchten Teilfolge nicht ausgegliedert, und es folgt der Verfahrensschritt V3290. Anderenfalls folgt der Verfahrensschritt V3270. Dieser untersuchte Programmteil mit der geringsten Anzahl von prognostizierten Cache-Misses wird innerhalb der variierten und untersuchten Teilfolge an die letzte Stelle verschoben. Es folgt der Verfahrensschritt V3280. Dieser Programmteil wird aus der variierten und untersuchten ersten Teilfolge ausgegliedert und in die unmittelbar nachfolgende zweite Teilfolge eingegliedert. Danach folgt der Verfahrensschritt V3290.

Beim Verfahrensschritt V3290 wird geprüft, ob nur eine erste Teilfolge vorhanden ist. Falls dies der Fall ist, so wird der Verfahrensschritt V3200 beendet. Anderenfalls, also falls innere Teilfolgen eingeteilt sind, wird geprüft, ob bereits jede der inneren ersten Teilfolgen variiert und untersucht ist. Falls dies noch nicht dre Fall ist, so folgt der Verfahrensschritt V3210, bei welchem die nächste innere erste Teilfolge zum Variieren und untersuchen aufbereitet wird. Anderenfalls, also falls bereits alle inneren ersten Teilfolgen variiert und untersucht sind, so wird der Verfahrensschritt V3210 beendet.

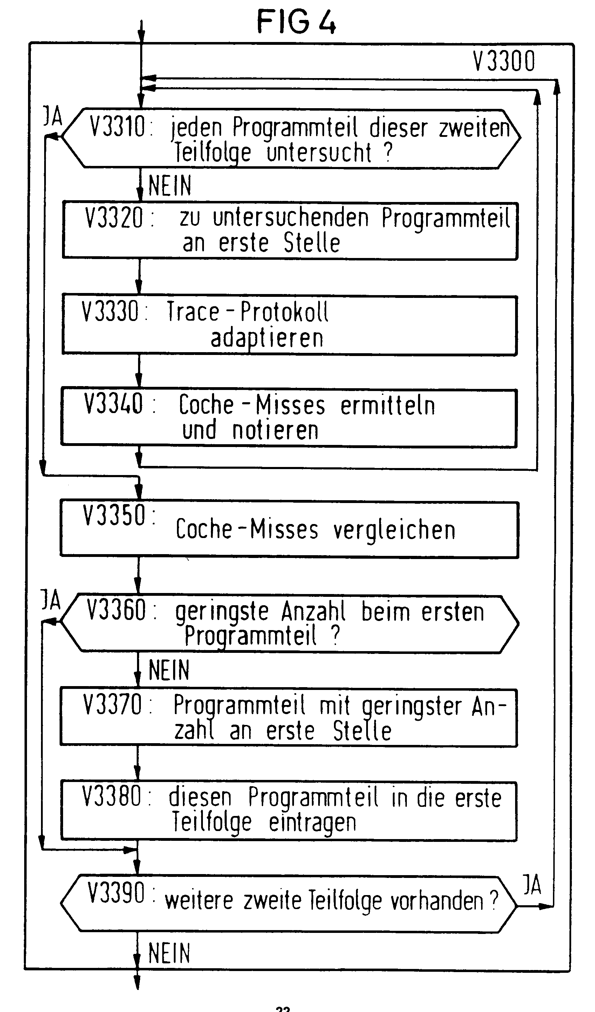

Die Figur 4 zeigt ein Beispiel in Form eines Übersichtsflußdiagrammes für den Verfahrensschritt V3300.

Es wird der Verfahrensschritt V3310 ausgeführt. Es wird die zweite Teilfolge untersucht. Für den Fall, daß innere erste und zweite Teilfolgen bereits eingeteilt sind, wird beim Verfahrensschritt V3310 jede der inneren zweiten Teilfolgen jeweils einmal unabhängig variiert und untersucht. Von der zu variierenden und zu untersuchenden zweiten Teilfolge wird jeder ihrer Programmteile ausgewählt. Falls bereits alle Programmteile dieser Teilfolge ausgewählt worden sind, so folgt der Verfahrensschritt V3350.

Falls ein zu untersuchender Programmteil beim Verfahrensschritt V3310 ausgewählt ist, so folgt der Verfahrensschritt V3320. Die zu variierende Anordnung der Programmteile wird vorerst so verändert, daß der zu untersuchende Programmteil innerhalb seiner zweiten Teilfolge verschoben wird an deren erste Stelle. Danach folgt der Verfahrensschritt V3330. Es werden die Speicherzugriffe des Trace-Protokolls für die soeben vorerst veränderte Anordnung bezüglich des Adreßpegels aktualisiert und adaptiert, so daß daraus erkennbar ist, ob insbesondere bei gleichen Cacheblöcken Cache-Misses zu prognostizieren sind. Danach folgt der Verfahrensschritt V3340. Es werden für diese Anordnung Cache-Misses ermittelt und notiert. Danach folgt der Verfahrensschritt V3310.

Falls für eine der Teilfolgen jeder Programmteil untersucht ist, und dies beim Verfahrensschritt V3310 erkannt ist, so folgt der Verfahrensschritt V3350. Es werden für die beim Variieren dieser Teilfolge untersuchten Programmteile die jeweils prognostizierten Cache-Misses untereinander verglichen. Es folgt der Verfahrensschritt V3360. Es wird geprüft, ob eine geringste Anzahl von prognostizierten Cache-Misses bei jenem untersuchten Programmteil vorliegt, welcher in der variierten und untersuchten Teilfolge an erster Stelle ist. Falls dies der Fall ist, wird dieser Programmteil aus der soeben variierten und untersuchten Teilfolge nicht ausgegliedert, und es folgt der Verfahrensschritt V3390. Anderenfalls folgt der Verfahrensschritt V3370. Dieser untersuchte Programmteil mit der geringsten Anzahl von prognostizierten Cache-Misses wird innerhalb der variierten und untersuchten Teilfolge an die erste Stelle verschoben. Es folgt der Verfahrensschritt V3380. Dieser Programmteil wird aus der variierten und untersuchten zweiten Teilfolge ausgegliedert und in die unmittelbar vorhergehende erste Teilfoge eingegliedert. Danach folgt der Verfahrensschritt V3390.

Beim Verfahrensschritt V3390 wird geprüft, ob nur ein zweite Teilfolge vorhanden ist. Falls dies der Fall ist, so wird der Verfahrensschritt V3300 beendet. Anderenfalls, also falls innere Teilfolgen eingeteilt sind, wird geprüft, ob bereits jede der inneren zweiten Teilfolgen variiert und untersucht ist. Falls dies noch nicht der Fall ist, so folgt der Verfahrensschritt V3310, bei welchem die nächste innere zweite Teilfolge zum Variieren und Untersuchen aufbereitet wird. Anderenfalls, also falls bereits alle inneren zweiten Teilfolgen variiert und untersucht sind, so wird der Verfahrensschritt V3310 beendet.

Zusammenfassend kann dies wie folgt erläutert werden. Aus einer Reihenfolge der Programmteile in einem vorläufigen Layout werden Teilfolgen betrachtet, variiert, als bestmöglich ermittelt bezüglich eines Gewinns zur Nutzung eines beim Ablauf des Programms zugrundegelegten Cache. Durch fortgesetzte Unterteilung der Teilfolgen soll der Gewinn weitergesteigert werden. Sofern eine weitere Unterteilung nicht sinnvoll ist, sind erneut große Teilfolgen zu betrachten, zu variieren, als bestmögliche zu ermitteln, weiter zu unterteilen usw., sodaß eine weitere Steigerung des Gewinns erzielbar ist.

## Patentansprüche

1. Betriebsverfahren zur Verarbeitung eines Programms in einem Datenverarbeitungssystem mit mindestens einem Prozessor, einem Cache und einem Speicher,
   - bei dem von einem Compiler aus einem Quellenprogramm ein aus mehreren Programmteilen (PT) bestehendes Objektprogramm generiert wird und in den Speicher geladen wird und bei dem bei der Bearbeitung des Objektprogramms jeweils Programmblöcke in das Cache geladen werden,
   - bei dem ein Traceverfahren durchgeführt wird zur Simulation des aus Programmteilen (PT) bestehenden Objektprogramms, durch das Speicherzugriffe (Z) in einem Traceprotokoll aufgelistet werden und angegeben wird, von welcher Programmstelle (S) eines Programmteils zu welchem Programmteil ein Zugriff erfolgt,
   - bei dem das Programm in einem Variierungsverfahren in zumindest zwei Teilfolgen von Programmteilen variiert wird und nach jeder Variation für jede Teilfolge unter Verwendung des Traceprotokolls festgestellt wird, wie oft bei der beim Ablauf des Programms erforderlichen Ladung von Programmteilen in das Cache bei Ausführung der einzelnen Programmteile Cache-Misses auftreten und das Variieren der Programmteile wiederholt wird, um eine Folge von Programmteilen mit minimaler Anzahl von Cache-Miss zu erreichen
   - und bei dem ein Programmerstellungsverfahren durchgeführt wird unter Verwendung der Folge von Programmteilen, bei der die Anzahl der Cache-Miss ein Minimum ist.

2. Betriebsverfahren nach Anspruch 1, bei dem nur zwei jeweils zusammenhängende Teilfolgen betrachtet werden, bei dem beim Variieren ein Programmteil von einer der Teilfolgen in die andere der Teilfolgen so eingefügt wird, daß diese so erweiterte Teilfolge sonst nicht verschoben wird.

3. Betriebsverfahren nach Anspruch 2, bei dem jeder Programmteil einer zu variierenden Teilfolge unmittelbar benachbart zur anderen Teilfolge zum Prognostizieren der Cache-Misses untersucht wird, und bei dem von der zu variierenden Teilfolge mit jenem Programmteil die andere der Teilfolgen erweitert wird, für welche eine niedrigste Anzahl von Cache-Misses bei diesen Untersuchungen prognostiziert wird.

4. Betriebsverfahren nach einem der Ansprüche 1 bis 3,
-bei dem innerhalb von wenigstens einer der Teilfolgen eine Unterteilung in weitere Teilfolgen erfolgt, so daß diese weiteren Teilfolgen anhand von Variierungsschritten variiert und untersucht werden.

5. Betriebsverfahren nach einem der Ansprüche 1 bis 4,
- bei dem fortgesetzt jeweils weitere unterteilte Teilfolgen innerhalb von jeder der zuletzt variierten und untersuchten Teilfolgen unterteilt, variiert und untersucht werden.

6. Betriebsverfahren nach einem der Ansprüche 1 bis 5,
- bei dem eine variierte und untersuchte Anordnung der Programmteile erneut variiert und untersucht wird, indem daraus neue Teilfolgen betrachtet, variiert und untersucht werden.

## Claims

1. Operating process for processing a program in a data processing system, having at least one processor, a cache and a memory,
   - in which an object program comprising a plurality of program parts (PT) is generated from a source program by a compiler and is loaded into the memory and in which program blocks are respectively loaded into the cache during the processing of the object program,
   - in which a trace process is carried out to simulate the object program comprising program parts (PT), by which process memory accesses (Z) are listed in a trace log and it is specified from which program point (S) of a program part to which program part an access takes place,
   - in which the program is varied in a variation process in at least two subsequences of program parts and, after each variation, it is established for each subsequence, using the trace log, how often during the loading of program parts into the cache, required when running the program, in execution of the individual program parts cache misses occur and the varying of the program parts is repeated in order to achieve a sequence of program parts with a minimal number of cache misses
   - and in which a program compilation process is carried out using the sequence of program parts in which the number of cache misses is a minimum.

2. Operating process according to Claim 1, in which only two respectively contiguous subsequences are examined, in which, when varying, a program part of one of the subsequences is inserted into the other of the subsequences such that this thus-extended subsequence is otherwise not displaced.

3. Operating process according to Claim 2, in which each program part of a subsequence to be varied which is directly alongside the other subsequence is investigated for forecasting cache misses, and in which, from the subsequence to be varied, the other of the subsequences is extended with that program part for which a lowest number of cache misses is forecast in these investigations.

4. Operating process according to one of Claims 1 to 3,
   - in which a subdivision into further subsequences takes place within at least one of the subsequences, so that these further subsequences are varied and investigated on the basis of variation steps.

5. Operating process according to one of Claims 1 to 4,
   - in which in continuation, further subdivided subsequences are respectively subdivided, varied and investigated within each of the last-varied and investigated subsequences.

6. Operating process according to one of Claims 1 to 5,
   - in which a varied and investigated arrangement of the program parts is varied and investigated once again by examining, varying and investigating new subsequences therefrom.

## Revendications

1. Procédé d'exploitation pour élaborer un programme dans un système de traitement de données comportant au moins un processeur, une antémémoire et une mémoire, selon lequel
   - un programme objet constitué par plusieurs parties de programme (PT) est produit par un compilateur à partir d'un programme source et est chargé dans la mémoire, et lors de l'élaboration du programme objet, des blocs de programme sont chargés respectivement dans l'antémémoire,
   - un procédé de suivi est mis en oeuvre pour simuler le programme objet constitué par des parties de programme (PT) et au moyen duquel des accès (Z) à la mémoire sont listés dans un protocole de suivi et une indication est donnée indiquant à partir de quel emplacement (S) d'une partie de programme un accès est effectué, et à quelle partie de programme,
   - le programme est modifié dans une procédure de modification suivant au moins deux séquences partielles de parties de programme et, après chaque modification, pour chaque séquence partielle est établie, moyennant l'utilisation du protocole de suivi, avec quelle fréquence des insuccès dans l'antémémoire apparaissent lors de l'exécution des différentes parties du programme, lors du chargement, qui est nécessaire lors de l'exécution du programme, de parties de programme dans l'antémémoire, et la modification des parties du programme est répétée pour l'obtention d'une suite de parties de programme avec un nombre minimum d'insuccès dans l'antémémoire, et
   - une procédure d'établissement de programme est exécutée moyennant l'utilisation de la suite de parties du programme, dans laquelle le nombre des insuccès dans l'antémémoire est minimum.

2. Procédé d'exploitation suivant la revendication 1, selon lequel on considère uniquement deux suites partielles respectives continues, et lors de la modification, une partie du programme est insérée depuis l'une des suites partielles dans l'autre des suites partielles de telle sorte que cette suite partielle ainsi élargie n'est par ailleurs pas décalée.

3. Procédé d'exploitation suivant la revendication 2, selon lequel chaque partie du programme d'une suite partielle devant être modifiée est recherchée directement au voisinage de l'autre suite partielle pour effectuer le pronostic des insuccès dans l'antémémoire, et selon lequel la suite partielle devant être modifiée accroît, avec cette partie du programme, l'autre des suites partielles pour laquelle un nombre minimum d'insuccès dans l'antémémoire est pronostiqué lors de ces recherches.

4. Procédé d'exploitation suivant l'une des revendications 1 à 3, selon lequel une subdivision en d'autres suites partielles est exécutée à l'intérieur d'au moins l'une des suites partielles de sorte que ces autres suites partielles sont modifiées et examinées sur la base de pas de modification.

5. Procédé d'exploitation suivant l'une des revendications 1 à 4, selon lequel respectivement d'autres suites partielles subdivisées sont subdivisées, modifiées et examinées continuellement à l'intérieur de chacune des suites partielles modifiées et examinées en dernier lieu.

6. Procédé d'exploitation suivant l'une des revendications 1 à 5, selon lequel une disposition modifiée examinée des parties de programme est à nouveau modifiée et examinée, par le fait qu'à partir de là, de nouvelles suites partielles sont observées, modifiées et examinées.

# FIG 1

| V 1000: Programmteile aufbereiten |
| --- |

| V 2000: Trace – Verfahren |
| --- |

| V 3000: Variierungsverfahren |
| --- |

| V 4000: Programmerstellungsverfahren |
| --- |

# FIG 2

V 3000

V3100: eine erste und eine zweite (neue)
Teilfolge bilden

V3200: erste Teilfolge (n) variieren

V3300: zweite Teilfolge (n) variieren

NEIN
V3400: weiter variieren ?

JA

NEIN
V3500: Gleichgewichtskriterium ?

JA

NEIN
V3600: Teilfolgen unterteilbar ?

JA

V3700: innerhalb jeder Teilfolge eine innere
erste u. zweite Teilfolge bilden

# FIG 3

V 3200

JA — V3210: jeden Programmteil dieser ersten Teilfolge untersucht ?

NEIN

V3220: zu untersuchendes Programmteil an letzter Stelle

V3230: Trace-Protokoll adaptieren

V3240: Coche-Misses ermitteln und notieren

V3250: Coche-Misses vergleichen

JA — V3260: geringste Anzahl beim letzten Programmteil ?

NEIN

V3270: Programmteil mit geringster Anzahl an letzte Stelle

V3280: diesen Programmteil in die zweite Teilfolge eintragen

V3290: weitere erste Teilfolge vorhanden ? — JA

NEIN

# FIG 4

V 3300

JA ⟨ V3310 : jeden Programmteil dieser zweiten Teilfolge untersucht ? ⟩

NEIN

V3320 : zu untersuchenden Programmteil an erste Stelle

V3330 : Trace - Protokoll adaptieren

V3340 : Coche - Misses ermitteln und notieren

V3350 : Coche - Misses vergleichen

JA ⟨ V3360 : geringste Anzahl beim ersten Programmteil ? ⟩

NEIN

V3370 : Programmteil mit geringster Anzahl an erste Stelle

V3380 : diesen Programmteil in die erste Teilfolge eintragen

V3390 : weitere zweite Teilfolge vorhanden ?    JA

NEIN

# FIG 5

# FIG 6

FIG 7

HS

ADR.0

S1
ADR.66
CB.4
Z12
Z13
MISS=2
MISS=7

PT1

S2
ADR.335
CB.4
Z23

MISS=1

ADR.522

S3
ADR.578
CB.4
Z35

MISS=3

PT2

ADR.872

S4
ADR.1026
CB.0
Z64

MISS=1

PT3

ADR.1142

S5
ADR.1348
CB.4

PT4

S6
ADR.1549
CB.0

ADR.1721